# EUROPEAN PATENT SPECIFICATION

(11) **EP 4 400 546 B1**
(45) Date of publication and mention of the grant of the patent: **16.04.2025**
(21) Application number: 22904716.2
(22) Date of filing: 09.12.2022
(51) Int. Cl.: C08L 67/02, C08L 67/04, C08K 5/1515, C08K 5/13, C08J 5/18

(54) **RESIN COMPOSITION AND BIODEGRADABLE RESIN MOLDED PRODUCT COMPRISING SAME**
HARZZUSAMMENSETZUNG UND BIOABBAUBARES HARZFORMPRODUKT DAMIT
COMPOSITION DE RÉSINE ET PRODUIT MOULÉ EN RÉSINE BIODÉGRADABLE LA COMPRENANT

(30) Priority: 10.12.2021 KR 20210176953; 16.03.2022 KR 20220032856
(43) Date of publication of application: 17.07.2024
(73) Proprietor: LG Chem, Ltd., Yeongdeungpo-gu Seoul 07336 (KR)
(72) Inventor: CHOI, Wooseon, Daejeon 34122 (KR); JEONG, Byeong Joon, Daejeon 34122 (KR); JANG, Se Young, Daejeon 34122 (KR); KIM, Soongin, Daejeon 34122 (KR); JEONG, Moon Gon, Daejeon 34122 (KR)
(74) Representative: Goddar, Heinz J.
(86) International application number: PCT/KR2022/020034
(87) International publication number: WO 2023/106887

(56) References cited:
- CN-A- 110 698 819
- KR-A- 20180 044 715
- KR-A- 20180 044 715
- KR-A- 20210 069 073
- FARIAS DA SILVA JULIANA M ET AL: "Epoxidized cardanol-based prepolymer as promising biobased compatibilizing agent for PLA/PBAT blends", POLYMER TESTING, ELSEVIER, AMSTERDAM, NL, vol. 93, 17 October 2020 (2020-10-17), XP086416131, ISSN: 0142-9418, [retrieved on 20201017], DOI: 10.1016/J.POLYMERTESTING.2020.106889
- FARIAS DA SILVA JULIANA M.; SOARES BLUMA G.: "Epoxidized cardanol-based prepolymer as promising biobased compatibilizing agent for PLA/PBAT blends", POLYMER TESTING, ELSEVIER, AMSTERDAM, NL, vol. 93, 17 October 2020 (2020-10-17), AMSTERDAM, NL , XP086416131, ISSN: 0142-9418, DOI: 10.1016/j.polymertesting.2020.106889
- THIYAGU T THENDRAL, J.V SAI PRASANNA KUMAR, P GURUSAMY, SATHIYAMOORTHY V, T MARIDURAI, VR ARUN PRAKASH: "Effect of cashew shell biomass synthesized cardanol oil green compatibilizer on flexibility, barrier, thermal, and wettability of PLA/PBAT biocomposite films", BIOMASS CONVERSION AND BIOREFINERY, SPRINGER BERLIN HEIDELBERG, BERLIN/HEIDELBERG, 23 October 2021 (2021-10-23), Berlin/Heidelberg, XP093072095, ISSN: 2190-6815, DOI: 10.1007/s13399-021-01941-9

## Description

### [Cross-Reference to Related Application(s)]

This application is a National Phase entry pursuant to 35 U.S.C. §371 of International Application No. PCT/KR2022/020034, filed on December 9, 2022, and claims the benefit of and priority to Korean Patent Application No. 10-2021-0176953, filed on December 10, 2021 and Korean Patent Application No. 10-2022-0032856, filed on March 16, 2022 in the Korean Intellectual Property Office.

### [Technical Field]

The present disclosure relates to a resin composition and a biodegradable resin product comprising the same.

### [Background]

Thermoplastic polymer resin has excellent mechanical properties and chemical properties, and thus, is being used in various fields such as containers for drinking water, medical material, food package, food containers, automobile molded products, agricultural vinyl, and the like.

Among thermoplastic polymer resin, a polyethylene film has excellent mechanical properties, is harmless to humans, and can be continuously deformed if heat is applied, and thus, is used a lot as a hot sealing bag for food packaging, or an agricultural mulching film, and the like.

A hot sealing bag for food packaging is mainly used for food vacuum packaging, and a polyethylene film that can achieve excellent bonding strength even at low sealing temperature is mainly used.

The agricultural film is mainly used for mulching agricultural technique. Mulching refers to material that covers the surface of soil when cultivating crops. If the upper surface of soil is covered with various kinds of materials, growth of weeds can be blocked, and damage by harmful insects can be prevented, and thus, use of agricultural pesticides can be reduced. And, temperature of soil can be easily controlled, beneficial bacteria in soil can be proliferated, solid erosion can be prevented, and sold moisture can be retained.

As such mulching material, for example, leaves of crops such as rice straw, grass, and the like, or polyolefin-based films, and the like may be mentioned, and generally, synthetic resin such as a polyethylene films is used.

However, the polyethylene film used as a hot sealing bag for food packaging or mulching material is not decomposed under natural environment and is limited in recycling. Particularly, recently, plastics such as discarded polyethylene films flow into sea, and are crushed into very small microplastics by reflux and sunlight in the sea. KR 2018 0044 715 A relates to a biodegradable resin composition and a biodegradable article produced therefrom, and more particularly, to a biodegradable resin composition capable of producing a biodegradable article having excellent tensile strength and tensile elongation. KR 2018 0044 715 A provides a biodegradable resin composition comprising PLA capable of producing a biodegradable article having excellent tensile strength and tensile elongation while having improved tear strength. Moreover, biodegradable films having excellent hot sealing bonding force are achieved.

Currently, it is known that uncountable amount of such microplastics is floating in the sea, and they are introduced into the bodies of sea creatures, accumulated in ecosystem, and affects the whole food chain.

Thus, there is a demand for studies on substitutes for previously used thermoplastics.

In order to solve the problem, recently, development of mulching films consisting of photodegradable or biodegradable polymers is being actively attempted, but biodegradability is not sufficient, and the mechanical properties are inferior to those of the existing polyethylene films.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

### [Summary]

### [Technical Problems]

It is an object of the present disclosure to provide a biodegradable resin composition for resin products that may realize high sealing strength even at low temperature during hot sealing.

It is another object of the present disclosure to provide a biodegradable resin product comprising the resin composition.

### [Technical Solutions]

There is provided herein a resin composition, comprising: 100 parts by weight of polybutylene adipate terephthalate (PBAT); 0.5 to 60 parts by weight of polylactic acid; and 0.1 to 15 parts by weight of epoxidized cardanol.

The polylactic acid may be comprised in the resin composition in an amount of 1 to 45 parts by weight.

The resin composition may have a weight ratio of polybutylene adipate terephthalate (PBAT) to the polylactic acid of about 6.5:3.5 or more.

The resin composition may have a weight ratio of polybutylene adipate terephthalate (PBAT) to the polylactic acid of about 9.5:0.5 or less.

The epoxidized cardanol may be comprised in the resin composition in an amount of 0.2 to 10 parts by weight.

The epoxidized cardanol may comprise one or more groups represented by Chemical Formula 1 in the molecule: 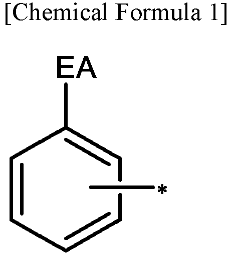 wherein in Chemical Formula 1, EA is a C2-5 epoxidized alkoxy, and * denotes that the group of Chemical Formula 1 is a monovalent radical bonded at a carbon atom of the benzene ring.

The epoxidized cardanol may comprise two groups represented by Chemical Formula 1 in the molecule: 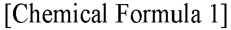 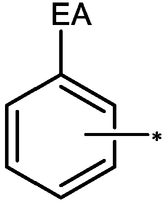 wherein in Chemical Formula 1, EA is a C2-5 epoxidized alkoxy, and * denotes that the group of Chemical Formula 1 is a monovalent radical bonded at a carbon atom of the benzene ring.

The epoxidized cardanol may comprise a compound represented by Chemical Formula 2: 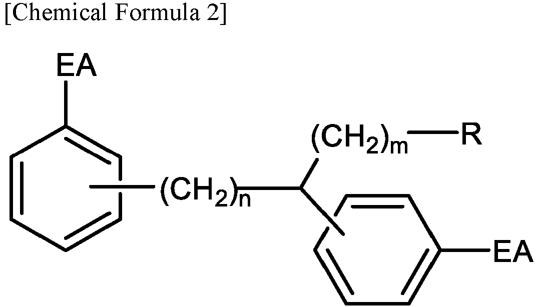 wherein in Chemical Formula 2, each EA is independently a C2-5 epoxidized alkoxy, n is an integer of 0 to 10, m is an integer of 0 to 10 and R is hydrogen or a methyl group.

The epoxidized cardanol may be comprised in the resin composition in an amount of 0.01 to 10 parts by weight, based on the total 100 parts by weight of the polybutylene adipate terephthalate (PBAT) and the polylactic acid.

The resin composition may further comprise about 1 to about 50 parts by weight of inorganic filler, based on the total 100 parts by weight of the polybutylene adipate terephthalate (PBAT) and the polylactic acid.

There is also provided herein a biodegradable resin product comprising the above-explained resin composition.

The biodegradable resin product may have a tensile strength measured according to ISO 527 standard of about 250 to about 500kgf/cm², or about 250kg/cm²to about 400kg/cm².

According to one embodiment of the present disclosure, the biodegradable resin product may have an elongation measured according to ISO 527 standard of about 300% or more.

The biodegradable resin product may be a biodegradable film.

The biodegradable resin product may be a hot sealing film.

The biodegradable resin product may have a hot seal initiation temperature measured under 2N condition according to ASTM F1921 standard of about 80°C to about 120°C, about 100°C to about 120°C, about 105°C to about 116°C, or about 105°C to about 115°C.

The terms used herein are only to explain specific embodiments, and are not intended to limit the present disclosure.

A singular expression includes a plural expression thereof, unless it is expressly stated or obvious from the context that such is not intended.

As used herein, the terms "comprise", "equipped" or "have", etc. are intended to designate the existence of practiced characteristic, number, step, constructional element or combinations thereof, and they are not intended to preclude the possibility of existence or addition of one or more other characteristics, numbers, steps, constructional elements or combinations thereof.

And, in case it is stated that each layer or element is formed "on" or "above" each layer or element, it means that each layer or element is formed right above each layer or element, or that other layers or elements may be additionally formed between the layers or on the object or substrate.

Although various modifications can be made to the present disclosure and the present disclosure may have various forms, specific examples will be illustrated and explained in detail below.

Hereinafter, the present disclosure will be explained in detail.

The inventors of this present disclosure found out that in case epoxidized cardanol is used together in blended resin of polybutylene adipate terephthalate (PBAT) and polylactic acid (PLA), mechanical properties such as elongation, tensile strength, and the like may be very excellent, and high bonding strength may be realized even at low temperature during hot sealing, and completed the invention.

The resin composition according to one aspect of the present disclosure comprises, based on 100 parts by weight of polybutylene adipate terephthalate (PBAT), 0.5 to 60 parts by weight of polylactic acid, and 0.1 to 15 parts by weight of epoxidized cardanol.

The resin composition may comprise, based on 100 parts by weight of the polybutylene adipate terephthalate (PBAT), about 1 to about 45 parts by weight of the polylactic acid, and may comprise about 1 part by weight or more, or about 5 parts by weight or more, or about 10 parts by weight or more, or about 45 parts by weight or less, or about 43 parts by weight or less of the polylactic acid.

In the resin composition, a weight ratio of polybutylene adipate terephthalate (PBAT) : polylactic acid may be about 6.5:3.5 or more, or about 6.9:3.1 or more, or about 7.5:2.5 or more.

In the resin composition, a weight ratio of the polybutylene adipate terephthalate (PBAT):polylactic acid may be about 9.5:0.5 or less, or about 9.1:0.9 or less.

If the content of polylactic acid is too small, effect for improving mechanical properties of PBAT may not be exhibited, and if the content of polylactic acid is too large, hardness may increase, and thus, elongation of the resin composition may be lowered, and particularly, in case the resin composition is processed into a biodegradable film, and the like, processabilty may be deteriorated, and it may be difficult to realize properties required for use as a mulching film, a hot sealing film, and the like.

Polyester-based resin has excellent mechanical properties and chemical properties, and thus, is being used in various industrial fields. Among them, polybutylene adipate terephthalate (PBAT) can be biodegraded into soft polyester, and thus, is getting the spotlight as a substitute for polyolefin-based polymer commonly used in agricultural films.

However, since the mechanical properties of PBAT is insufficient to use alone for corresponding use, it is mainly blended with polylactic acid (PLA); or when PBAT is used alone, it is compounded with organic filler such as carbon black.

However, since PBAT has very low compatibility with PLA, a compatibilizer should be necessarily used when blending.

Thus, the resin composition according to one aspect of the present disclosure comprises epoxidized cardanol as a compatibilizer component.

An epoxidized cardanol, due to the molecular structural characteristics, may increase flexibility of a polymer chain, and increase compatibility of PBAT with PLA, and when preparing a film using such a composition, chain diffusion and entanglement at the film interface may be increased.

Thus, the resin composition according to one aspect of the present disclosure can not only achieve very high elongation and tensile strength, but also realize high bonding strength even at low temperature during hot sealing.

The resin composition may comprise, based on 100 parts by weight of the polybutylene adipate terephthalate (PBAT), about 0.1 to about 15 parts by weight, or about 0.1 parts by weight or more, or about 0.2 parts by weight or more, or about 0.3 parts by weight or more, or about 0.4 parts by weight or more, and about 15 parts by weight or less, or about 10 parts by weight or less, or about 5 parts by weight or less, or about 4.5 parts by weight or less of the epoxidized cardanol.

The epoxidized cardanol may comprise one or more groups represented by the following Chemical Formula 1 in the molecule: 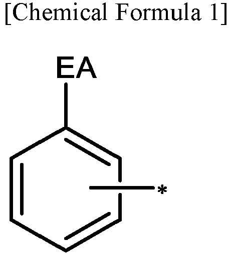 in the Chemical Formula 1, EA is a C2-5 epoxidized alkoxy, and * denotes that the group of the Chemical Formula 1 is a monovalent radical bonded at the carbon atom of the benzene ring.

The epoxidized cardanol comprising one or more groups represented by the following Chemical Formula 1, due to the molecular structural characteristic comprising an epoxy group and a benzene ring, may increase flexibility of a polymer chain, and increase compatibility of PBAT with PLA, and when preparing a film using such a composition, chain diffusion and entanglement at the film interface may be increased.

The epoxidized cardanol may comprise two groups represented by the following Chemical Formula 1 in the molecule: 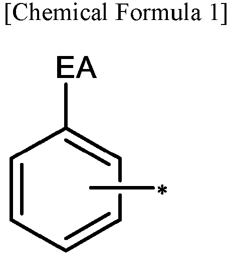 in the Chemical Formula 1, EA is a C2-5 epoxidized alkoxy, and * denotes that the group of the Chemical Formula 1 is a monovalent radical bonded at the carbon atom of the benzene ring.

The epoxidized cardanol comprising two groups represented by the following Chemical Formula 1, due to reactivity of the epoxy groups, may progress reactions between two epoxy groups and PBAT or PLA, thereby more significantly increasing chain diffusion and entanglement.

The epoxidized cardanol may comprise a compound represented by the following Chemical Formula 2: 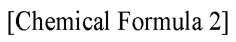 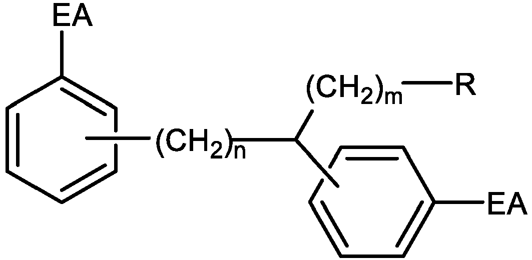 in the Chemical Formula 2, EA is a C2-5 epoxidized alkoxy, n is an integer of 0 to 10, or an integer of 1 or more, or 3 or more, or 10 or less, or 8 or less, m is an integer of 0 to 10, or an integer of 1 or more, or 3 or more, or 10 or less, or 8 or less, and R is hydrogen or a methyl group.

The compound represented by the Chemical Formula 2 comprises two epoxy groups, and comprises both an alkyl group and a benzene ring in the molecule, and thus, can appropriately increase flexibility and rigidity of a polymer chain, and increase compatibility of PBAT with PLA.

The resin composition may comprise, based on the total 100 parts by weight of the polybutylene adipate terephthalate (PBAT) and polylactic acid, about 0.01 parts by weight to about 10 parts by weight, or about 0.1 parts by weight to about 5 parts by weight, or about 0.1 to about 1 part by weight of the epoxidized cardanol.

If too little epoxidized cardanol is included relative to polybutylene adipate terephthalate (PBAT) and polylactic acid, the compatibility of PBAT with PLA may be deteriorated, resulting in poor blending between PBAT and polylactic acid, and if too much is included, mechanical properties may be compromised.

And, the resin composition may comprise, based on the total 100 parts by weight of the polybutylene adipate terephthalate (PBAT) and polylactic acid, about 0.01 parts by weight to about 10 parts by weight, or about 0.1 parts by weight to 5 parts by weight of the compound represented by the Chemical Formula 2.

If the content of epoxidized cardanol is too small relative to polybutylene adipate terephthalate (PBAT) , compatibility of PBAT and PLA may be deteriorated, and thus, blending may not be achieved, and if the content is too large, mechanical properties may be deteriorated, , and if too much epoxidized cardanol is included relative to polybutylene adipate terephthalate (PBAT) , the average length of the polybutylene adipate terephthalate (PBAT) main chain is likely to be too long, which may result in poor processability of the resin composition, difficulty in blown film molding, and decreased mechanical properties of the resin composition, such as elongation.

If epoxidized cardanol is included in the above range compared to polybutylene adipate terephthalate (PBAT), the compatibility of PBAT and PLA is increased with the effect of increasing the appropriate molecular weight, and excellent processability and mechanical properties can be achieved, and in particular, properties such as excellent processability and high elongation value can be maintained even when inorganic additives are added.

Besides, the resin composition according to one embodiment of the present disclosure may further comprise other additives. As the additives, additives commonly used for molding of resin compositions in the technical field to which the present disclosure pertains, namely, in the field of thermoplastic polymer, may be used without specific limitations.

The additives may comprise a heat stabilizer, a UV stabilizer, and the like.

And, the additives may be included in the content of about 1 to about 30 parts by weight, based on the total 100 parts by weight of the polybutylene adipate terephthalate (PBAT) and polylactic acid.

And, the resin composition may comprise, based on the total 100 parts by weight of the polybutylene adipate terephthalate (PBAT) and polylactic acid, about 1 to about 50 parts by weight, or about 10 to about 30 parts by weight, or about 15 to about 25 parts by weight of inorganic filler.

The inorganic filler may improve mechanical properties and processability of the resin composition. If the content of the inorganic filler is too small, advantageous effects as explained above may not be exhibited, and if the content of the inorganic filler is too large, mechanical properties and processability of the resin composition may be deteriorated to the contrary.

There is also provided herein a biodegradable resin product comprising one or more resin compositions which are described above.

And, the biodegradable resin molded product may be a biodegradable film, more specifically, a biodegradable blown film formed by a blowing process.

And, the biodegradable resin product may be a biodegradable film.

The biodegradable resin product may have tensile strength measured according to ISO 527 standard, of about 250kg/cm² to about 500kg/cm², or about 250kg/cm² to about 400kg/cm², and thus, have very excellent tensile strength.

And, the biodegradable resin product may have elongation measured according to ISO 527 standard, of about 300% or more, or about 350% or more.

Due to such excellent mechanical properties, it may be used for agricultural mulching films or packaging material, and the like.

According to another embodiment of the present disclosure, the biodegradable resin product may be a hot sealing film, more specifically, a hot sealing film formed by a blowing process.

According to one embodiment of the present disclosure, the biodegradable resin product may have hot seal initiation temperature measured under 2N condition according to ASTM F1921 standard, of about 80°C to about 120°C, or about 100°C to about 120°C, or about 105°C to about 115°C.

Bonding strength of 2N is a minimum bonding strength value for evaluating hot sealing, and in case bonding strength is 2N or more, it may be considered that hot sealing is realized without specific problems. The biodegradable resin product according to one embodiment of the present disclosure may realize hot sealing even at much lower temperature than before.

According to one embodiment of the present disclosure, the biodegradable resin product may have sealing strength measured at about 112°C according to ASTM F1921 standard, of about 2N or more, or about 2N to about 4N.

According to another embodiment of the present disclosure, the biodegradable resin product may have sealing strength measured at about 114°C according to ASTM F1921 standard, of about 2N or more, or about 2N to about 4N.

As such, the biodegradable resin product according to one embodiment of the present disclosure may realize high sealing strength even at much lower temperature than before.

### [Advantageous Effects]

The resin composition of the present disclosure has excellent biodegradability and excellent mechanical properties at the same time, and can provide resin products such as a hot sealing film, a hot sealing bag, and the like, capable of realizing high sealing strength even at low temperature during hot sealing.

### [Detailed Description]

Hereinafter, the actions and effects of the invention will be explained in detail through specific examples of the present disclosure. However, theses examples are presented only as the illustrations of the present disclosure, and the scope of the right of the invention is not determined thereby.

### <Examples>

### Information on the samples used

As polybutylene adipate-co-terephthalate, TH801T (Tunhe Co. Ltd) was used.
Melting point: 119°C, melt index(190 °C 2.16Kg): 2.7g/10min

As polylactic acid, AI-1001 (ESUN Co. Ltd) was used.
Density: 1.24g/cm3, melt index(190 °C 2.16Kg): 3.82g/10min

As epoxidized cardanol, NC-541S (Cardolite Co. Ltd) was used.

As epoxidized soybean oil, SONGSTAB E-700(Songwon Industry) was used.

### Inorganic additives:

As inorganic additives, calcium carbonate was used.
Calcium carbonate: product by Omya, Hydrocarb 95T

### Preparation of resin compositions (pellets)

Resin compositions were prepared according to the compositions of the following Table 1. Specifically, the PBAT, PLA, and epoxidized cardanol were introduced in a twin screw extruder (32mm) according to the compositions of the following Table 1, and extruded under conditions of barrel temperature: 200 °C, feed: 30kg/hr, 300 rpm, thus preparing resin compositions in the form of pellets.

**[Table 1]**

| * parts by weight | PBAT | PLA | Calcium carbonate | Compatibi lizer |
|---|---|---|---|---|
| Comparative Example A | 80 | 20 | 20 | 0 |
| Comparative Example B | 80 | 20 | 20 | 0.4 |
| Comparative Example C | 80 | 20 | 20 | 1.0 |
| Comparative Example D | 80 | 20 | 20 | 3.0 |
| Example A | 80 | 20 | 20 | 0.4 |
| Example B | 80 | 20 | 20 | 1.0 |
| Example C | 80 | 20 | 20 | 3.0 |

In the Table 1, as a compatibilizer component, epoxidized soybean oil was used in Comparative Examples, and epoxidized cardanol was used in Examples.

### Preparation of blown film

The prepared pellets were molded to a thickness of 0.05mm at an extrusion temperature of about 160°C to about 170°C, using a single screw extruder (Blown film M/C, 19 pie, L/D=25), thus preparing blown films. Wherein, blown-up ratio was set to about 1.8, and linear velocity was set to about 5m/min.

### Measurement of properties

### Measurement of tensile strength, modulus of elasticity and elongation

Using universal testing machine (manufacturing company: GALDABINI, model name: QUASUR 50), tensile strength of the film was measured according to ISO 527 standard.

A specimen was prepared in the form of bar (10mm x 150mm).

### Measurement and assessment of hot seal initiation temperature and sealing strength

For the blown film prepared above, using a hot tack tester (manufacturing company: Swiss Management, model name: Model 4000), according to ASTM F1921 standard, sealing strength according to sealing temperature was measured, and the temperature value when the sealing strength became 2N was determined as a hot seal initiation temperature.

Then, based on the sealing temperature at 115 °C, if the sealing strength value meets 2N or more, it is labeled as good, and if it does not meet 2N, it is labeled as bad.

The measurement results were summarized in the following Table 2.

**[Table 2]**

| | Tensile strength (MD, Kg/cm²) | Elongation (MD, %) | Tensile strength (TD, Kg/cm²) | Elongation (TD, %) |
|---|---|---|---|---|
| Comparative Example A | 319 | 376 | 269 | 554 |
| Comparative Example B | 282 | 384 | 285 | 537 |
| Comparative Example C | 290 | 368 | 287 | 583 |
| Comparative Example D | 281 | 374 | 255 | 522 |
| Example A | 342 | 392 | 323 | 567 |
| Example B | 332 | 385 | 318 | 559 |
| Example C | 323 | 377 | 294 | 538 |

| | *HSIT (°C) | Sealing strength at 115°C | Blown-up ratio | linear velocity (m/min) |
|---|---|---|---|---|
| Comparative Example A | 118 | Bad | 1.8 | 5 |
| Comparative Example B | 122 | Bad | 1.8 | 5 |
| Comparative Example C | 120 | Bad | 1.8 | 5 |
| Comparative Example D | 124 | Bad | 1.8 | 5 |
| Example A | 112 | Good | 1.8 | 5 |
| Example B | 112 | Good | 1.8 | 5 |
| Example C | 114 | Good | 1.8 | 5 |

| | | | | |
|---|---|---|---|---|
| *hot seal initiation temperature | | | | |

Referring to Table 2 above, it can be clearly seen that the resin composition according to one embodiment of the present disclosure is capable of hot sealing at a lower temperature with respect to sealing properties, even though the property values such as tensile strength and elongation are generally superior to the Comparative Example.

In the case of the Comparative Example, the mechanical properties are also generally inferior to those of the Examples, and with respect to the sealing strength property, it can be seen that the hot seal initiation temperature is relatively high, and more energy is required for sealing.

### Preparation of resin compositions (pellets)

In order to determine the differences between the PBAT and PLA composition ratios, resin compositions were prepared according to the compositions of the following Table 3. Specifically, the PBAT, PLA, and epoxidized cardanol were introduced in a twin screw extruder(32mm) according to the compositions of the following Table, and extruded under conditions of barrel temperature: 200 °C, feed: 30kg/hr, 300 rpm, thus preparing resin compositions in the form of pellets.

**[Table 3]**

| * parts by weight | PBAT | PLA | Calcium carbonate | Epoxidize d cardanol |
|---|---|---|---|---|
| Comparative Example 1 | 90 | 10 | 20 | 0 |
| Example 1-1 | 90 | 10 | 20 | 0.4 |
| Comparative Example 2 | 80 | 20 | 20 | 0 |
| Example 2-1 | 80 | 20 | 20 | 0.4 |
| Example 2-2 | 80 | 20 | 20 | 1 |
| Example 2-3 | 80 | 20 | 20 | 3 |
| Comparative Example 3 | 70 | 30 | 20 | 0 |
| Example 3-1 | 70 | 30 | 20 | 0.4 |
| Example 3-2 | 70 | 30 | 20 | 1 |
| Example 3-3 | 70 | 30 | 20 | 3 |
| Example 4-1 | 60 | 40 | 20 | 0.4 |
| Example 4-2 | 60 | 40 | 20 | 1 |
| Example 4-3 | 60 | 40 | 20 | 3 |
| Comparative Example 5-1 | 25 | 75 | 20 | 0.4 |
| Comparative Example 5-2 | 25 | 75 | 20 | 1 |
| Comparative Example 5-3 | 25 | 75 | 20 | 3 |

### Preparation of blown film

The prepared pellets were molded to a thickness of 0.05mm at an extrusion temperature of about 160°C to about 170°C, using a single screw extruder (Blown film M/C, 19 pie, L/D=25), thus preparing blown films.

To evaluate the processability, the linear speed was fixed at about 10 m/min, and the maximum expansion ratio was evaluated at that linear speed.

### Measurement and assessment of sealing strength

For the blown film prepared above, using a hot tack tester (manufacturing company: Swiss Management, model name: Model 4000), according to ASTM F1921 standard, based on the sealing temperature at 115°C, if the sealing strength value meets 2N or more, it is labeled as good, and if it does not meet 2N, it is labeled as bad.

### Evaluation of Appearance

The blown films prepared in the Examples and Comparative Examples were visually observed and evaluated as bad if the films had defects such as bumpy bends or stretches, and as good if no special defects were observed.

The measurement results were summarized in the following Tables 4.

**[Table 4]**

| | Tensile strength (MD, Kg/cm²) | Elongation (MD, %) | sealing strength | maximum expansion ratio | Appearanc e |
|---|---|---|---|---|---|
| Comparative Example 1 | 326 | 578 | Bad | ~3 | Good |
| Example 1-1 | 344 | 593 | Good | ~3 | Good |
| Comparative Example 2 | 319 | 376 | Bad | ~3 | Good |
| Example 2-1 | 342 | 392 | Good | ~3 | Good |
| Example 2-2 | 332 | 385 | Good | ~3 | Good |
| Example 2-3 | 327 | 377 | Good | ~3 | Good |
| Comparative Example 3 | 341 | 308 | Bad | ~3 | Good |
| Example 3-1 | 338 | 315 | Good | ~3 | Good |
| Example 3-2 | 366 | 326 | Good | ~3 | Good |
| Example 3-3 | 353 | 321 | Good | ~3 | Good |
| Example 4-1 | 397 | 247 | Good | ~3 | Good |
| Example 4-2 | 385 | 253 | Good | ~3 | Good |
| Example 4-3 | 394 | 258 | Good | ~3 | Good |
| Comparative Example 5-1 | 440 | 49 | * | ~1.1 or less | Bad |
| Comparative Example 5-2 | 459 | 42 | ** | ~1.1 or less | Bad |
| Comparative Example 5-3 | 421 | 89 | *** | ~1.1 or less | Bad |

| | | | | | |
|---|---|---|---|---|---|
| *, **, ***: In Comparative Examples 5-1 through 5-3, the maximum expansion ratio in the blowing process was about 1.1 or less, and the film was not properly made, making it difficult to measure HSIT according to standard measurement methods. | | | | | |

Referring to Tables, it can be clearly confirmed that the resin composition according to one embodiment of the present disclosure can achieve very high elongation and tensile strength, and simultaneously, can realize high sealing strength even at relatively low temperature during hot sealing.

## Claims

1. A resin composition, comprising:
100 parts by weight of polybutylene adipate terephthalate (PBAT);
0.5 to 60 parts by weight of polylactic acid, and
0.1 to 15 parts by weight of epoxidized cardanol.

2. The resin composition according to claim 1, wherein the polylactic acid is comprised in the resin composition in an amount of 1 to 45 parts by weight.

3. The resin composition according to claim 1, wherein a weight ratio of polybutylene adipate terephthalate (PBAT) to the polylactic acid is 6.5:3.5 or more.

4. The resin composition according to claim 1, wherein a weight ratio of polybutylene adipate terephthalate (PBAT) to the polylactic acid is 9.5:0.5 or less.

5. The resin composition according to claim 1, wherein the epoxidized cardanol is comprised in the resin composition in an amount of 0.2 to 10 parts by weight.

6. The resin composition according to claim 1, wherein the epoxidized cardanol comprises one or more groups represented by Chemical Formula 1 in the molecule: 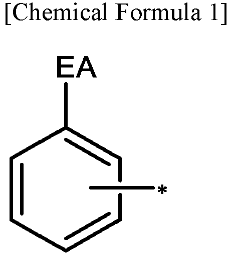 wherein in Chemical Formula 1, EA is a C2-5 epoxidized alkoxy, and * denotes that the group of Chemical Formula 1 is a monovalent radical bonded at a carbon atom of the benzene ring.

7. The resin composition according to claim 1, wherein the epoxidized cardanol comprises two groups represented by Chemical Formula 1 in the molecule: 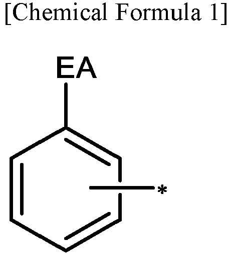 wherein in Chemical Formula 1, EA is a C2-5 epoxidized alkoxy, and * denotes that the group of Chemical Formula 1 is a monovalent radical bonded at a carbon atom of the benzene ring.

8. The resin composition according to claim 1, wherein the epoxidized cardanol comprises a compound represented by Chemical Formula 2: 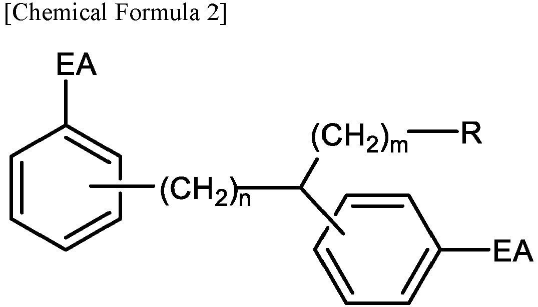 wherein in Chemical Formula 2, each EA is independently a C2-5 epoxidized alkoxy, n is an integer of 0 to 10, m is an integer of 0 to 10, and R is hydrogen or a methyl group.

9. The resin composition according to claim 1, wherein the epoxidized cardanol is comprised in the resin composition in an amount of 0.01 to 10 parts by weight, based on the total 100 parts by weight of the polybutylene adipate terephthalate (PBAT) and the polylactic acid,.

10. The resin composition according to claim 1, wherein the resin composition further comprises 1 to 50 parts by weight of inorganic filler, based on the total 100 parts by weight of the polybutylene adipate terephthalate (PBAT) and the polylactic acid.

11. A biodegradable resin product, comprising:
the resin composition of claim 1.

12. The biodegradable resin product according to claim 11, wherein the biodegradable resin product has a tensile strength measured according to ISO 527 standard of 24,52 to 49,03 MPa (250 to 500 kgf/cm²).

13. The biodegradable resin product according to claim 11, wherein the biodegradable resin product has an elongation measured according to ISO 527 standard of 300% or more.

14. The biodegradable resin product according to claim 11, wherein the biodegradable resin product has a hot seal initiation temperature measured under 2N condition according to ASTM F1921 standard of 80°C to 120°C.

15. The biodegradable resin product according to claim 11, wherein the biodegradable resin product is a biodegradable film.

## Patentansprüche

1. Harzzusammensetzung, umfassend:
100 Gewichtsteile Polybutylenadipatterephthalat (PBAT);
0,5 bis 60 Gewichtsteile Polymilchsäure und
0,1 bis 15 Gewichtsteile epoxidiertes Cardanol.

2. Harzzusammensetzung nach Anspruch 1, wobei die Polymilchsäure in der Harzzusammensetzung in einer Menge von 1 bis 45 Gewichtsteilen enthalten ist.

3. Harzzusammensetzung nach Anspruch 1, wobei ein Gewichtsverhältnis von Polybutylenadipatterephthalat (PBAT) zu der Polymilchsäure 6,5:3,5 oder mehr beträgt.

4. Harzzusammensetzung nach Anspruch 1, wobei ein Gewichtsverhältnis von Polybutylenadipatterephthalat (PBAT) zu der Polymilchsäure 9,5:0,5 oder weniger beträgt.

5. Harzzusammensetzung nach Anspruch 1, wobei das epoxidierte Cardanol in der Harzzusammensetzung in einer Menge von 0,2 bis 10 Gewichtsteilen enthalten ist.

6. Harzzusammensetzung nach Anspruch 1, wobei das epoxidierte Cardanol eine oder mehrere durch die chemische Formel 1 dargestellte Gruppen in dem Molekül umfasst: 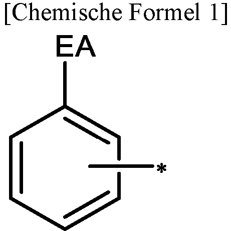 wobei in der chemischen Formel 1 EA ein epoxidiertes C2-5 -Alkoxy ist und * angibt, dass die Gruppe der chemischen Formel 1 ein einwertiges Radikal ist, das an ein Kohlenstoffatom des Benzolrings gebunden ist.

7. Harzzusammensetzung nach Anspruch 1, wobei das epoxidierte Cardanol zwei durch die chemische Formel 1 dargestellte Gruppen in dem Molekül umfasst: 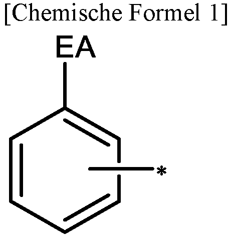 wobei in der chemischen Formel 1 EA ein epoxidiertes C2-5 -Alkoxy ist und * angibt, dass die Gruppe der chemischen Formel 1 ein einwertiges Radikal ist, das an ein Kohlenstoffatom des Benzolrings gebunden ist.

8. Harzzusammensetzung nach Anspruch 1, wobei das epoxidierte Cardanol eine durch die chemische Formel 2 dargestellte Verbindung umfasst: 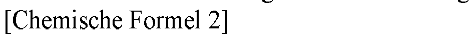 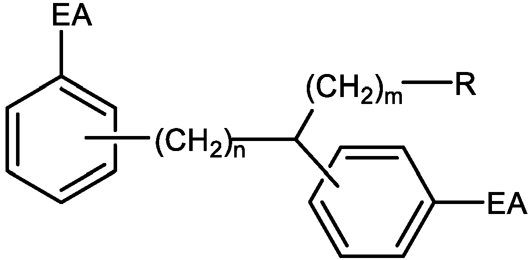 wobei in der chemischen Formel 2 jedes EA unabhängig ein epoxidiertes C2-5 - Alkoxy ist, n eine ganze Zahl von 0 bis 10 ist, m eine ganze Zahl von 0 bis 10 ist und R Wasserstoff oder eine Methylgruppe ist.

9. Harzzusammensetzung nach Anspruch 1, wobei das epoxidierte Cardanol in der Harzzusammensetzung in einer Menge von 0,01 bis 10 Gewichtsteilen, bezogen auf die gesamten 100 Gewichtsteile des Polybutylenadipatterephthalats (PBAT) und der Polymilchsäure, enthalten ist.

10. Harzzusammensetzung nach Anspruch 1, wobei die Harzzusammensetzung ferner 1 bis 50 Gewichtsteile anorganischen Füllstoff, bezogen auf die gesamten 100 Gewichtsteile des Polybutylenadipatterephthalats (PBAT) und der Polymilchsäure, umfasst.

11. Biologisch abbaubares Harzprodukt, umfassend:
die Harzzusammensetzung nach Anspruch 1.

12. Biologisch abbaubares Harzprodukt nach Anspruch 11, wobei das biologisch abbaubare Harzprodukt eine gemäß der Norm ISO 527 gemessene Zugfestigkeit von 24,52 bis 49,03 MPA (250 bis 500 kgf/cm²) aufweist.

13. Biologisch abbaubares Harzprodukt nach Anspruch 11, wobei das biologisch abbaubare Harzprodukt eine gemäß der Norm ISO 527 gemessene Dehnung von 300 % oder mehr aufweist.

14. Biologisch abbaubares Harzprodukt nach Anspruch 11, wobei das biologisch abbaubare Harzprodukt eine unter 2N-Bedingung gemäß der Norm ASTM F1921 gemessene Heißsiegelinitiierungstemperatur von 80 °C bis 120 °C aufweist.

15. Biologisch abbaubares Harzprodukt nach Anspruch 11, wobei das biologisch abbaubare Harzprodukt ein biologisch abbaubarer Film ist.

## Revendications

1. Composition de résine, comprenant :
100 parties en poids de polybutylène adipate-téréphtalate (PBAT) ;
0,5 à 60 parties en poids d'acide polylactique, et
0,1 à 15 parties en poids de cardanol époxydé.

2. Composition de résine selon la revendication 1, dans laquelle l'acide polylactique est compris dans la composition de résine dans une quantité de 1 à 45 parties en poids.

3. Composition de résine selon la revendication 1, dans laquelle un rapport en poids du polybutylène adipate-téréphtalate (PBAT) à l'acide polylactique est égal ou supérieur à 6,5:3,5.

4. Composition de résine selon la revendication 1, dans laquelle un rapport en poids de polybutylène adipate-téréphtalate (PBAT) à l'acide polylactique est égal ou inférieur à 9,5:0,5.

5. Composition de résine selon la revendication 1, dans laquelle le cardanol époxydé est compris dans la composition de résine dans une quantité de 0,2 à 10 parties en poids.

6. Composition de résine selon la revendication 1, dans laquelle le cardanol époxydé comprend un ou plusieurs groupes représentés par la Formule chimique 1 dans la molécule : 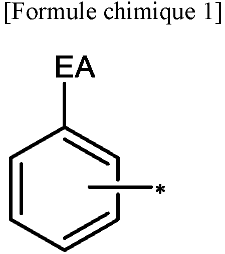 dans laquelle dans la Formule chimique 1, EA est un alkoxy époxydé en C2-5, et * indique que le groupe de la Formule chimique 1 est un radical monovalent lié à un atome de carbone du cycle de benzène.

7. Composition de résine selon la revendication 1, dans laquelle le cardanol époxydé comprend deux groupes représentés par la Formule chimique 1 dans la molécule : 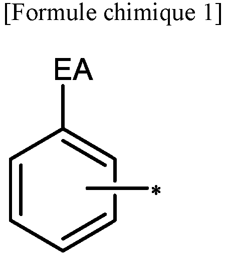 dans laquelle dans la Formule chimique 1, EA est un alkoxy époxydé en C2-5, et * indique que le groupe de la Formule chimique 1 est un radical monovalent lié à un atome de carbone du cycle de benzène.

8. Composition de résine selon la revendication 1, dans laquelle le cardanol époxydé comprend un composé représenté par la Formule chimique 2 : 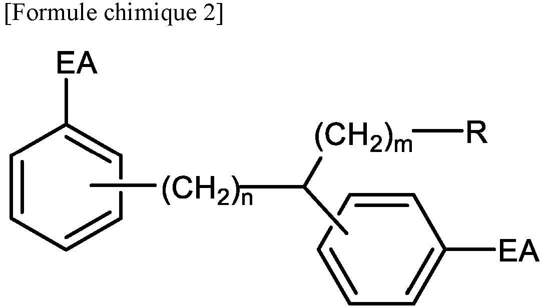 dans laquelle dans la Formule chimique 2, chaque EA est indépendamment un alkoxy époxydé en C2-5, n est un nombre entier de 0 à 10, m est un nombre entier de 0 à 10 et R est un hydrogène ou un groupe méthyle.

9. Composition de résine selon la revendication 1, dans laquelle le cardanol époxydé est compris dans la composition de résine dans une quantité de 0,01 à 10 parties en poids, sur la base du total de 100 parties en poids du polybutylène adipate-téréphtalate (PBAT) et de l'acide polylactique.

10. Composition de résine selon la revendication 1, dans laquelle la composition de résine comprend en outre 1 à 50 parties en poids de charge inorganique, sur la base du total de 100 parties en poids du polybutylène adipate-téréphtalate (PBAT) et de l'acide polylactique.

11. Produit de résine biodégradable, comprenant :
la composition de résine selon la revendication 1.

12. Produit de résine biodégradable selon la revendication 11, dans lequel le produit de résine biodégradable a une résistance à la traction mesurée selon la norme ISO 527, de 24,52 à 49,03 MPA (250 à 500 kgf/cm²).

13. Produit de résine biodégradable selon la revendication 11, dans lequel le produit de résine biodégradable a un allongement mesuré selon la norme ISO 527, égal ou supérieur à 300 %.

14. Produit de résine biodégradable selon la revendication 11, dans lequel le produit de résine biodégradable a une température d'amorçage de scellage à chaud mesurée sous condition 2N selon la norme ASTM F1921, de 80°C à 120°C.

15. Produit de résine biodégradable selon la revendication 11, dans lequel le produit de résine biodégradable est un film biodégradable.
